# EUROPEAN PATENT APPLICATION

(11) **EP 3 184 489 A1**
(43) Date of publication of application: **28.06.2017**
(21) Application number: 15833085.2
(22) Date of filing: 28.07.2015
(51) Int. Cl.: C01B 33/035, G01N 23/203, G01N 23/207, G01N 23/225

(54) **METHOD FOR MANUFACTURING POLYCRYSTALLINE SILICON BAR AND POLYCRYSTALLINE SILICON BAR**

(30) Priority: 18.08.2014 JP 2014166103
(71) Applicant: Shin-Etsu Chemical Co., Ltd., Tokyo 100-0004 (JP)
(72) Inventor: MIYAO, Shuichi, Joetsu-shi Niigata 942-8601 (JP); NETSU, Shigeyoshi, Joetsu-shi Niigata 942-8601 (JP)
(74) Representative: WP Thompson
(86) International application number: PCT/JP2015/003759
(87) International publication number: WO 2016/027416

(57) **Abstract**

In the present invention, when polycrystalline silicon bar is manufactured by the Siemens method, polycrystalline silicon is deposited, for example, under the conditions that during performing the deposition reaction of polycrystalline silicon, the reaction temperature is set to fall within a range from 1100°C to 1150°C and the internal pressure of the furnace is controlled to fall within a range from 0.45 to 0.9 MPa. By controlling the internal pressure of the furnace so as to fall within such a range, it is possible to obtain a polycrystalline silicon bar having an average value of the crystal grain sizes of 6 µm or less, based on the crystal grain sizes evaluated by the EBSD method in arbitrary portions.

## Description

### Technical Field

The present invention relates to a technique for manufacturing polycrystalline silicon. More specifically, the present invention relates to a technique for manufacturing high-quality polycrystalline silicon capable of controlling the crystal grain size, the crystal orientation and the thermal diffusivity of the polycrystalline silicon so as to fall within desired ranges.

### Background Art

A high-purity and high-quality silicon substrate is a semiconductor material essential for manufacturing present-day semiconductor devices and the like.

Such a silicon substrate is manufactured with polycrystalline silicon as a raw material by using the CZ method or the FZ method, and semiconductor-grade polycrystalline silicon is manufactured in many cases by the Siemens method (for example, see Patent Literature 1 (National Publication of International Patent Application No. 2004-532786)). The Siemens method is a method in which by bringing a gas of a silane raw material such as trichlorosilane or monosilane into contact with a heated silicon core wire, polycrystalline silicon is grown in the vapor phase (deposited) on the surface of the silicon core wire by the CVD (Chemical Vapor Deposition) method.

In the Siemens method, in general, as the reaction gases, hydrogen gas as a carrier gas and trichlorosilane as a raw material gas are used. In order to enhance the productivity of polycrystalline silicon, the gas concentration of trichlorosilane is increased as high as possible, and in order to increase the deposition rate of polycrystalline silicon, the reaction temperature in a bell jar is controlled so as to fall within a range nearly from 900°C to 1200°C.

When polycrystalline silicon is used as a raw material for manufacturing single crystalline silicon, the crystal grain size, the crystal orientation and the thermal diffusivity of the polycrystalline silicon are most basic and important characteristic values. This is because the meltability and the melting rate of polycrystalline silicon at the time of manufacturing single crystalline silicon are dependent on these characteristic values, and accordingly these characteristic values directly affect the crystal quality of single crystalline silicon.

In general, when the use of polycrystalline silicon is the use as a raw material for the manufacturing of single crystalline silicon by the CZ method, no special requirement is needed for the crystal orientation, but polycrystalline silicon having a relatively larger crystal grain size tends to be favored.

When the use of polycrystalline silicon is the use as a raw material for the manufacturing of single crystalline silicon by the FZ method, polycrystalline silicon having a small crystal grain size and being non-oriented tends to be favored.

However, the foregoing general tendencies are not absolute, in such a way that even polycrystalline silicon as a raw material for the manufacturing of single crystalline silicon by the CZ method is sometimes favored to be polycrystalline silicon having a relatively smaller crystal grain size, for example, when the melting time in a quartz crucible is intended to be shortened. When the power supply for melting is intended to be reduced, non-oriented polycrystalline silicon is sometimes favored.

In this way, when polycrystalline silicon is manufactured, the properties of the polycrystalline silicon are required to be controlled in such a way that the crystal grain size, the crystal orientation and the thermal diffusivity are appropriate for the use of the polycrystalline silicon.

In conventional techniques, the measurement methods of the crystal grain size, the crystal orientation and the thermal diffusivity have also been individually examined.

With respect to the crystal grain size, Patent Literature 2 (Japanese Patent Laid-Open No. 2014-031297) by the present inventors relates to an invention aiming at the provision of a technique contributing to stable manufacturing of single crystalline silicon by selecting polycrystalline silicon suitable as a raw material for the manufacturing of single crystalline silicon with a high quantitative performance and a high reproducibility, and discloses a method for selecting, as a raw material for manufacturing single crystalline silicon, a polycrystalline silicon bar simultaneously satisfying, when the electron backscattering diffraction image obtained by irradiating the main plane of a plate-like sample sampled from the polycrystalline silicon bar with electron beam is analyzed, the condition that the total area of the regions free from the detection of crystal grains having grain sizes of 0.5 µm or more is 10% or less of the total area irradiated with electron beam (the condition 1) and the condition that the number of crystal grains having the grain sizes falling within a range of 0.5 µm or more and less than 3 µm is 45% or more of the total number of the detected crystal grains (the condition 2).

With respect to the crystal orientation, Patent Literature 3 (Japanese Patent Laid-Open No. 2013-217653) by the present inventors relates to an invention aiming at the provision of a technique contributing to stable manufacturing of single crystalline silicon by selecting polycrystalline silicon suitable as a raw material for the manufacturing of single crystalline silicon with a high quantitative performance and a high reproducibility, and discloses a method for evaluating the degree of crystal orientation of polycrystalline silicon, wherein polycrystalline silicon is used as the plate-like sample; the plate-like sample is disposed at a position allowing the Bragg reflection from the Miller index plane <hkl> to be detected; the disk-like sample is in-pane rotated with a rotation angle φ about the center, taken as the rotation center, of the disk-like sample so as for the X-ray irradiation region determined by a slit to φ scan on the main plane of the disk-like sample; thus a chart exhibiting the dependence, on the rotation angle (φ) of the plate-like sample, of the Bragg reflection intensity from the Miller index plane <hkl> is obtained; and the degree of crystal orientation of the polycrystalline silicon is evaluated on the basis of the number of peaks appearing in the chart.

With respect to the thermal diffusivity, Patent Literature 4 (Japanese Patent Laid-Open No. 2014-034506) by the present inventors relates to an invention aiming at the provision of a technique contributing to stable manufacturing of single crystalline silicon by selecting polycrystalline silicon suitable as a raw material for the manufacturing of single crystalline silicon with a high quantitative performance and a high reproducibility, and discloses a method for selecting a polycrystalline silicon bar suitable as a raw material for manufacturing single crystalline silicon on the basis of the thermal diffusivity ratio (α(T)/αR(T)) wherein a plate-like sample is sampled from a polycrystalline silicon bar grown by the deposition based on a chemical growth method in such a way that the main plane of the sample is a cross section perpendicular to the radial direction of the polycrystalline silicon bar, and the thermal diffusivity α(T) of the plate-like sample is measured to be compared with the thermal diffusivity αR(T) of a standard sample.

### Citation List

### Patent Literature

Patent Literature 1: National Publication of International Patent Application No. 2004-532786
Patent Literature 2: Japanese Patent Laid-Open No. 2014-031297
Patent Literature 3: Japanese Patent Laid-Open No. 2013-217653
Patent Literature 4: Japanese Patent Laid-Open No. 2014-034506

### Summary of Invention

### Technical Problem

As described above, in the manufacturing of polycrystalline silicon, the properties of polycrystalline silicon are required to be controlled so as to give the crystal grain size, the crystal orientation and the thermal diffusivity appropriate for the use of the resulting polycrystalline silicon.

However, the conventional techniques inclusive of the methods disclosed in foregoing Patent Literature 2 to Patent Literature 4 have not been able to relate the crystal grain size, the crystal orientation and the thermal diffusivity to the manufacturing conditions (deposition conditions) of polycrystalline silicon, and accordingly have not been able to feed back the properties possessed by polycrystalline silicon to the deposition conditions.

The present invention has been achieved in view of such problems as described above, and an object of the present invention is to provide a technique enabling the control of the properties of polycrystalline silicon for the purpose of actualizing the crystal grain size, the crystal orientation and the thermal diffusivity suitable for the use of polycrystalline silicon.

### Solution to Problem

In order to solve the above-described problems, the method for manufacturing a polycrystalline silicon bar according to the present invention is a method for manufacturing a polycrystalline silicon bar on the basis of the Siemens method, wherein polycrystalline silicon is deposited under the condition that the interior of a reaction furnace is controlled within a pressure range from 0.45 to 0.9 MPa; and there is obtained a polycrystalline silicon bar having an average value of the crystal grain sizes of 6 µm or less, as evaluated by the EBSD method (electron backscattering diffraction method) in arbitrary portions of the polycrystalline silicon bar.

Preferably, the pressure range is controlled to be from 0.6 to 0.9 MPa.

The reaction temperature during performing the deposition reaction of polycrystalline silicon is set, for example, within a range from 1100°C to 1150°C.

The polycrystalline silicon bar according to the present invention is a polycrystalline silicon bar grown by the above-described method, wherein when a plate-like sample sampled from an arbitrary portion of the polycrystalline silicon bar is evaluated by the EBSD method (electron backscattering diffraction method), the crystal grain size is within a range from 0.5 to 30 µm and the average grain size is 6 µm or less.

The polycrystalline silicon bar according to the present invention is a polycrystalline silicon bar grown by the above-described method, wherein each of the n pieces of the plate-like samples sampled from the arbitrary portions of the polycrystalline silicon bar is disposed at a position allowing the Bragg reflection from the Miller index plane (111) to be detected, the average value of the diffraction intensities obtained by measuring the X-ray diffraction detection magnitudes while the plate-like samples are being rotated within the measurement plane is obtained, and when the population standard deviation and the population mean of the population of the measurement results of the n pieces of the plate-like samples are represented by σ and the µ, respectively, the value of the coefficient of variation defined by CV = σ/µ is 25% or less.

The polycrystalline silicon bar according to the present invention is a polycrystalline silicon bar grown by the above-described method, wherein each of the n pieces of the plate-like samples sampled from the arbitrary portions of the polycrystalline silicon bar is disposed at a position allowing the Bragg reflection from the Miller index plane (220) to be detected, the average value of the diffraction intensities obtained by measuring the X-ray diffraction detection magnitudes while the plate-like samples are being rotated within the measurement plane is obtained, and when the population standard deviation and the population mean of the population of the measurement results of the n pieces of the plate-like samples are represented by σ and the µ, respectively, the value of the coefficient of variation defined by CV = σ/µ is 30% or less.

The polycrystalline silicon bar according to the present invention is a polycrystalline silicon bar grown by the above-described method, wherein each of the n pieces of the plate-like samples sampled from the arbitrary portions of the polycrystalline silicon bar is disposed at a position allowing the Bragg reflection from the Miller index plane (220) to be detected, the ratio of the area of the diffraction peak, appearing in the chart obtained by measuring the X-ray diffraction detection magnitude while the plate-like sample is being rotated within the measurement plane, to the area of the total diffraction intensity is obtained for each of the n pieces of the plate-like samples, and the average value of the n area ratios is 5% or more.

The polycrystalline silicon bar according to the present invention is a polycrystalline silicon bar grown by the above-described method, wherein the thermal diffusivity of a plate-like sample sampled from an arbitrary portion of the polycrystalline silicon bar is 73 mm²/sec or less.

### Advantageous Effects of Invention

The present invention provides a technique enabling the control of the properties of polycrystalline silicon for the purpose of actualizing the crystal grain size, the crystal orientation and the thermal diffusivity suitable for the use of polycrystalline silicon.

### Brief Description of Drawings

[Figure 1] Figure 1 is a schematic cross-sectional diagram for illustrating an example of the structure of a reaction furnace for manufacturing a polycrystalline silicon bar.
[Figure 2A] Figure 2A is a diagram for illustrating an example of the sampling of a plate-like sample from a polycrystalline silicon bar grown by the deposition based a chemical vapor deposition method.
[Figure 2B] Figure 2B is another diagram for illustrating an example of the sampling of a plate-like sample from a polycrystalline silicon bar grown by the deposition based a chemical vapor deposition method.

### Description of Embodiments

Hereinafter, the method for manufacturing a polycrystalline silicon bar according to the present invention is described with reference to the accompanying drawings.

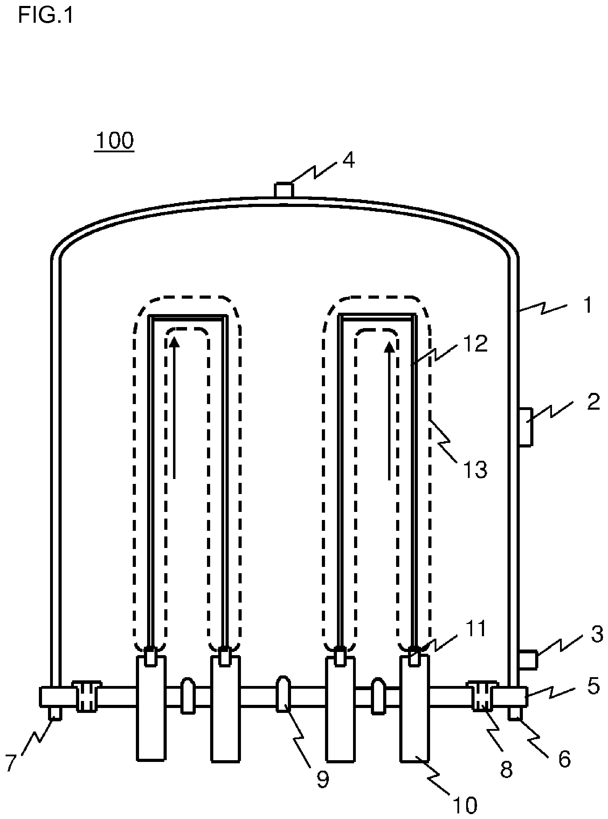

Figure 1 is a schematic cross-sectional diagram for illustrating an example of the structure of a reaction furnace for manufacturing a polycrystalline silicon bar.

A reaction furnace 100 is an apparatus for obtaining a polycrystalline silicon bar 13 by growing polycrystalline silicon in the vapor phase on the surface of a silicon core wire 12 by the Siemens method; the interior of the reaction furnace is closed with a bell jar 1 provided with an observation window 2 for examining the internal state and a base plate 5; in the resulting closed space, a plurality of inverted U-shaped silicon core wires 12 are arranged, and polycrystalline silicon is deposited on the surface of these silicon core wires (or silicon bars 13).

The base plate 5 is equipped with core wire holders 11 and metal electrodes 10 for generating heat by energizing from both ends of each of the silicon core wires 12, gas feeding nozzles 9 for feeding process gases such as nitrogen gas, hydrogen gas and trichlorosilane gas to the interior of the bell jar 1, and reaction exhaust gas outlet 8 for discharging gases after reaction to the outside of the bell jar 1. In Figure 1, three nozzles 9 are shown, but one or more nozzles 9 may be arranged.

Usually, the base plate 5 has a disk-like shape, and the metal electrodes 10, nozzles 9 and the reaction exhaust gas outlets 8 equipped in the base plate 5 are frequently arranged concentrically. As the raw material gas, a mixed gas composed of trichlorosilane and hydrogen is frequently used, and the reaction temperature is relatively as high as approximately 1000°C to 1200°C. Accordingly, a cooling medium inlet 3 and a cooling medium outlet 4 are arranged respectively in the lower portion and the upper portion of the bell jar 1, a cooling medium inlet 6 and a cooling medium outlet 7 are also arranged at both ends of the base plate 5, and thus, the bell jar 1 and the base plate 5 are cooled by feeding a cooling medium to the cooling paths of the bell jar 1 and the base plate 5, respectively. It is to be noted that in general, water is used as such a cooling medium. The internal surface temperature of the bell jar 1 during the deposition reaction is maintained nearly at 150°C to 400°C.

On the top of the metal electrode 10, a core wire holder 11 made of carbon for fixing the silicon core wire 12 is disposed. The raw material gas is allowed to flow under the condition that the silicon core wires 12 are energized to be self-heated and accordingly the surface temperature of the silicon core wires is controlled so as to fall approximately within a range from 1000 to 1200°C, and thus, polycrystalline silicon is deposited on the surface of the silicon core wires 12 to yield polycrystalline silicon bars.

In the present invention, when a polycrystalline silicon bar is manufactured by the Siemens method, polycrystalline silicon is deposited in under the conditions that during performing the deposition reaction of polycrystalline silicon, the reaction temperature is set so as to fall within a range, for example, from 1100°C to 1150°C and the interior of the reaction furnace is controlled so as to fall within a pressure range from 0.45 to 0.9 MPa.

According to the investigation performed by the present inventors, the internal pressure of the furnace during the deposition of polycrystalline silicon by the Siemens method is closely related to the grain size of the obtained polycrystal. The present inventors consider that the reason for this may be such that when deposition is performed under a relatively high pressure, free crystal growth of silicon is disturbed, and consequently the sizes of the individual crystal grains come to be small.

In the present invention, by performing the deposition under the above described conditions, there are obtained polycrystalline silicon bars having an average value of the crystal grain sizes of 6 µm or less as evaluated in arbitrary portions by the EBSD method (electron backscattering diffraction measurement method).

When the above-described pressure range is controlled so as to be 0.6 to 0.9 MPa, there can be obtained polycrystalline silicon bars having an average value of the crystal grain sizes of 2 µm or less as evaluated in arbitrary portions by the EBSD method (electron backscattering diffraction measurement method).

Table 1 collects the crystal grain sizes evaluated by using the samples sampled from the polycrystalline silicon bars obtained by depositing polycrystalline silicon with trichlorosilane gas as the raw material gas under the conditions that during performing the deposition reaction of polycrystalline silicon, the reaction temperature was set at nearly 1100°C and the internal pressure of the reaction furnace was controlled to be normal pressure (approximately 0.1 MPa), 0.45 MPa and 0.6 MPa.

It is to be noted that the grain sizes were determined according to the method described in Patent Literature 2 (Japanese Patent Laid-Open No. 2014-031297), and the "grain size" is defined as the diameter of the circle having the area obtained for each of the crystal grains detected by the analysis of the electron backscattering diffraction image.

**[Table 1]**

| Pressure | Minimum grain size | Maximum grain size | Average grain size |
|---|---|---|---|
| Normal pressure | 0.5 µm | 50 µm | 20 µm |
| 0.45 MPa | 0.5 µm | 30 µm | 6 µm |
| 0.6 MPa | 0.5 µm | 10 µm | 2 µm |

The deposition under normal pressure resulted in an average grain size of 20 µm; with the increase of the pressure, the average grain size decreased; under a pressure of 0.45 MPa, the average grain size was 6 µm, and under a pressure of 0.6 MPa, the average grain size was 2 µm.

The control of the internal pressure of the furnace can be performed by the control of the flow rate at the outlet of the reaction exhaust gas. The increase of the internal pressure of the furnace decreases the gas flow rate in the furnace, but allows the deposition rate to undergo insignificant variation. This may be ascribable to the decrease of the concentration of hydrochloric acid as a by-product with the increase of the internal pressure of the furnace, and the resulting lowering of the etching action by hydrochloric acid.

Such an effect of the internal pressure of the furnace is also recognized in the crystal orientation.

Table 2 collects the crystal orientations evaluated by using the samples sampled from the polycrystalline silicon bars obtained under the above-described three conditions.

The CV values in Table 2 are the "coefficients of variation" defined as follows: n pieces of plate-like samples (n = 14 to 16) having as a main plane a plane perpendicular to the radial direction were sampled at intervals of 10 mm in the growth direction (radial direction) of a polycrystalline silicon bar; each of the plate-like samples was disposed at a position allowing the Bragg reflection from the Miller index plane (111) or (220) to be detected; the disk-like sample was in-plane rotated with a rotation angle φ about the center, taken as the rotation center, of the disk-like sample so as for the X-ray irradiation region determined by a slit to φ scan on the main plane of the disk-like sample; thus, a chart exhibiting the rotation angle (φ) dependence of the Bragg reflection intensity from the Miller index plane of the plate-like sample was obtained; the average value of the diffraction intensities appearing in this chart was determined; and when the population standard deviation and the population mean of the population of the measurement results of the n pieces of the plate-like samples are represented by σ and the µ, respectively, the coefficient of variation is defined by CV = σ/µ.

**[Table 2]**

| Pressure | (111) CV value | (220) CV value | (220) peak area ratio | Needle-like crystal |
|---|---|---|---|---|
| Normal pressure | 17-42% | 13% | 0% | Not found |
| 0.45 MPa | 14% | 12% | 5% | Found |
| 0.6 MPa | 12% | 12% | 14% | Found |

The CV values of the Miller index planes (111) of the polycrystalline silicon bars deposited under normal pressure are as high as 17 to 42%, and thus, the orientation of each of the (111) planes is found to be high. In contrast, the CV values of the Miller index planes (111) of the polycrystalline silicon bars deposited under pressures of 0.45 MPa and 0.6 MPa are relatively as low as 12 to 14%, and thus, the orientation of each of the (111) planes is found to be low.

In Table 2, each of the (220) peak area ratios was obtained as follows: each of the n pieces of the plate-like samples sampled from the arbitrary portions of a polycrystalline silicon bar was disposed at a position allowing the Bragg reflection from the Miller index plane (220) to be detected, the ratio of the area of the diffraction peak, appearing in the chart obtained by measuring the X-ray diffraction detection magnitude while the plate-like sample was being rotated within the measurement plane, to the area of the total diffraction intensity was obtained for each of the n pieces of the plate-like samples, and the average value of the n area ratios was obtained.

The peak area ratios of the Miller index planes (220) of the polycrystalline silicon bars deposited under normal pressure are 0%, and in contrast, the peak area ratios of the Miller index planes (220) of the polycrystalline silicon bars deposited under pressures of 0.45 MPa and 0.6 MPa are 5% or more.

In Table 2, the "needle-like crystal" means a polycrystalline silicon bar giving a peak(s) appearing above the baseline in the above-described X-ray diffraction measurement chart, and this corresponds to a polycrystalline silicon bar in which the surface of the cross section of the locally oriented needle-like crystal is exposed.

By comprehensively considering these results, in the polycrystalline silicon bars deposited under normal pressure, the crystal grain sizes are relatively large and the orientation of the Miller index plane (111) is high; in contrast, in the polycrystalline silicon bars deposited under high pressures, the crystal grain sizes are relatively small and the orientation of the Miller index plane (111) is not found, but the needle-like crystals having the Miller index plane (220) as the deposition plane tend to be locally present.

As described above, the method according to the present invention makes it possible to obtain a polycrystalline silicon bar having crystal grain sizes falling within a range from 0.5 to 30 µm and an average grain size of 6 µm or less when plate-like samples sampled from arbitrary portions of the polycrystalline silicon bar were evaluated by the EBSD method (electron backscattering diffraction measurement method).

Such a polycrystalline silicon bar is a polycrystalline silicon bar wherein each of the n pieces of the plate-like samples sampled from the arbitrary portions of the polycrystalline silicon bar was disposed at a position allowing the Bragg reflection from the Miller index plane (111) to be detected, the average value of the diffraction intensities obtained by measuring the X-ray diffraction detection magnitudes while the plate-like samples were being rotated within the measurement plane was obtained, and when the population standard deviation and the population mean of the population of the measurement results of the n pieces of the plate-like samples are represented by σ and the µ, respectively, the value of the coefficient of variation defined by CV = σ/µ is 25% or less.

Such a polycrystalline silicon bar is a polycrystalline silicon bar wherein each of the n pieces of the plate-like samples sampled from the arbitrary portions of the polycrystalline silicon bar was disposed at a position allowing the Bragg reflection from the Miller index plane (220) to be detected, the average value of the diffraction intensities obtained by measuring the X-ray diffraction detection magnitudes while the plate-like samples were being rotated within the measurement plane was obtained, and when the population standard deviation and the population mean of the population of the measurement results of the n pieces of the plate-like samples are represented by σ and the µ, respectively, the value of the coefficient of variation defined by CV = σ/µ is 30% or less.

Such a polycrystalline silicon bar is a polycrystalline silicon bar wherein each of the n pieces of the plate-like samples sampled from the arbitrary portions of the polycrystalline silicon bar was disposed at a position allowing the Bragg reflection from the Miller index plane (220) to be detected, the ratio of the area of the diffraction peak, appearing in the chart obtained by measuring the X-ray diffraction detection magnitude while the plate-like sample was being rotated within the measurement plane, to the area of the total diffraction intensity was obtained for each of the n pieces of the plate-like samples, and the average value of the n area ratios is 5% or more.

Moreover, as described below, such a polycrystalline silicon bar is a polycrystalline silicon bar wherein the thermal diffusivity of a plate-like sample sampled from an arbitrary portion of the polycrystalline silicon bar is 73 mm²/sec or less.

The polycrystalline silicon bar according to the present invention may be used as it is as a raw material for manufacturing single crystalline silicon by the FZ method, and may also be crushed into silicon blocks to be used as a raw material for manufacturing single crystalline silicon by the CZ method.

### Examples

In order to verify the effects of the internal pressure of the furnace during deposition on the crystal grain size and the crystal orientation, polycrystalline silicon bars were grown by varying only the internal pressure of the furnace (normal pressure, 0.45 MPa, 0.6 MPa and 0.9 MPa) while the deposition reaction temperature and the gas concentration of trichlorosilane were kept constant.

The deposition reaction temperature was controlled so as to fall within a range from 1100 to 1150°C by monitoring the surface temperature of the polycrystalline silicon bar with a radiation thermometer. A mixed gas composed of trichlorosilane and hydrogen gas was fed to the furnace, and the trichlorosilane concentration in the mixed gas was set to be 30 mol%.

The gas flow rate was set to be 0.05 mol/cm²·h under the condition of normal pressure, and was set to be the flow rates at the outlet of the reaction exhaust gas determined when the respective internal pressures of the furnace were set. It is to be noted that "cm²" in the unit of the gas flow rate refers to the surface area of the polycrystalline silicon bar in the furnace.

Under the above-described conditions, polycrystalline silicon bars were grown to diameters of 140 to 160 mm under the respective pressures; after the completion of the reaction, the polycrystalline silicon bars were taken out; n pieces of plate-like samples (n = 14 to 16) having as a main plane a plane perpendicular to the radial direction were sampled at intervals of 10 mm in the growth direction (radial direction) of each of the polycrystalline silicon bars; the crystal grain size, the orientation and the thermal diffusivity of each of the polycrystalline silicon bars were evaluated by using these n pieces of samples.

It is to be noted that the reason for setting the upper limit of the internal pressure of the furnace to be 0.9 MPa came from the viewpoint of the pressure resistance of the bell jar and the viewpoint of avoiding excessive decrease of the deposition rate.

The plate-like samples were sampled according to, for example, the method disclosed in Patent Literature 3. The plate-like samples are each a disk-like sample of approximately 19 mm in diameter and approximately 2 mm in thickness. Specifically, the samples were sampled as follows.

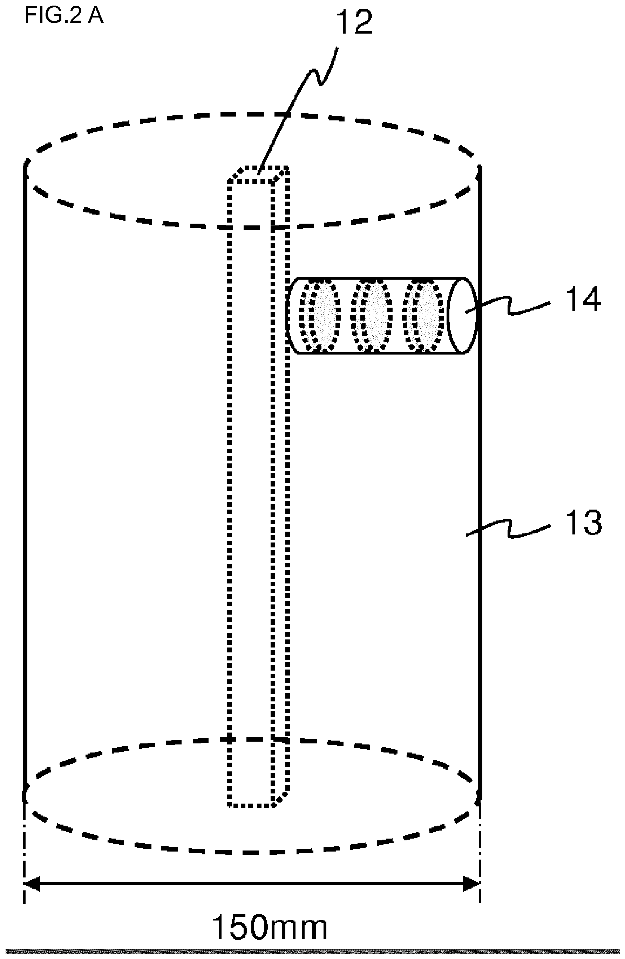

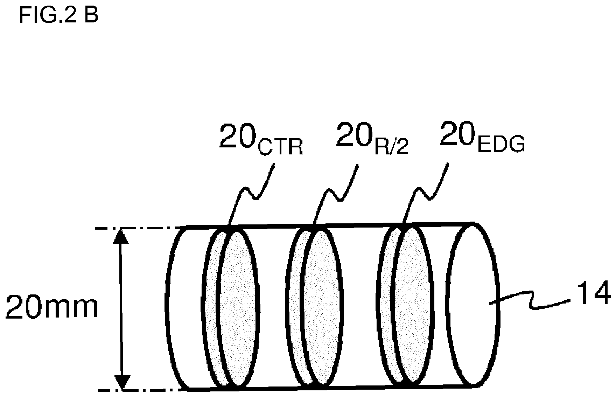

Figure 2A and Figure 2B are the diagrams for conceptually illustrating a method for sampling a plate-like sample 20 from a polycrystalline silicon bar 13. In Figure 2A, the reference sign 12 represents a silicon core wire used for forming a silicon bar by depositing polycrystalline silicon on the surface of the silicon core wire. In the example shown in Figure 2A and Figure 2B, for the purpose of simplifying the description, plate-like samples 20 are sampled from three portions (CTR: portion close to silicon core wire 12, EDG: portion close to side surface of polycrystalline silicon bar 13, R/2: portion midway between CTR and EGD); however, actually, n-pieces of plate-like samples (n = 14 to 16) are sampled at intervals of 10 mm in the growth direction (radial direction) of the polycrystalline silicon bar.

The diameter of the polycrystalline silicon bar 13 illustrated in Figure 2A is nearly 150 mm, and a rod 14 of nearly 19 mm in diameter and nearly 75 mm in length is gouged out, in a direction perpendicular to the longitudinal direction of the silicon core wire 12, from the side of the polycrystalline silicon bar 13.

Then, as shown in Figure 2B, the disk-like samples (20_{CTR}, 20_{EDG}, and 20_{R/2}) of nearly 2 mm in thickness, each having as the main plane the cross section perpendicular to the radial direction of the polycrystalline silicon bar 13 are sampled from the portion (CTR) close to the silicon core wire 12, the portion (EDG) close to the side surface of the polycrystalline silicon bar 13, and the portion (R/2) midway between CTR and EGD from the rod 14, respectively.

The portion(s) from which the rod(s) 14 is sampled, the length(s) of the rod(s) 14 and the number of the rod(s) may be appropriately determined according to the diameter of the silicon bar 13 and the diameter(s) of the gouged rod(s) 14; the plate-like samples 20 may be sampled from any portions of the gouged rod(s) 14; the portions are preferably the positions capable of rationally estimating the properties of the whole of the silicon bar 13. For example, when two pieces of plate-like samples are acquired, it is preferable to acquire the disk-like samples from the following two positions, with respect to the radius of the circumference of the silicon bar: a position located on the center side and another position located on the outside of the point located at half the radius from the center. Moreover, for example, a higher precision comparison can be performed when the acquisition positions of the two samples for performing comparison are located at a position located on the center side than the point located at one-third the radius from the center and another position located on the outside of the point located at two-thirds the radius from the center. The number of the plate-like samples to be compared with each other may be two or more, and has no particular upper limit.

The diameter of the plate-like sample 20 was set to be nearly 19 mm, but this is just an example, and the diameter may be appropriately set within a range causing no trouble during measurement.

The sample surface is required to be flat and a mirror surface for the purpose of performing the EBSD measurement; thus, in order to remove blade traces, the surface of each of the samples was polished sequentially with the abrasive carborundum #300, #600, and #1200, and after completion of the polishing, etching was performed with HF: HNO₃ = 1:5 (HF = 50 wt%, HNO₃ = 70 wt%) for 1 minute, to remove the abrasive. Subsequently, the surface of each of the samples was mirror polished with a polishing pad and a diamond abrasive 0.1 µm.

The measurement of the crystal grain size by EBSD can measure the crystal grain sizes from 0.5 µm to a few tens microns, and accordingly, when the measurement results are presented as a histogram, the distribution of the crystal grain size is manifested.

Table 3 collects the evaluation results of the crystal grain sizes, the crystal orientations, and the thermal diffusivities in the cases of normal pressure (Comparative Examples 1 and 2), and in the cases of the pressures of 0.45 MPa (Example 1), 0.6 Mpa (Example 2) and 0.9 MPa (Example 3).

**[Table 3]**

| Sample | Deposition conditions | | | Crystal grain size | | | Crystal orientation | | | Thermal diffusivity | Crystal growth methods | |
|---|---|---|---|---|---|---|---|---|---|---|---|---|
| | Raw material gas concentration vol% | Time | Pressure MPa | Min. | Max. | Ave | (111) c.v.% | (220) c.v.% | (220) Peak % | mm²/s | CZ | FZ |
| Comparative Example 1 | 30 | 0.7 | | 0.5 | 50 | 20 | 50 | 55 | 0 | 79 | Δ to ○ | × |
| Comparative Example 2 | 30 | 0.7 | | 0.5 | 30 | 7.3 | 45 | 45 | 0 | 77 | Δ to ○ | × |
| Example 1 | 30 | 1.0 | 0.45 | 0.5 | 30 | 6 | 25 | 30 | 5 | 73 | ○ | Δ |
| Example 2 | 30 | 1.1 | 0.6 | 0.5 | 10 | 2 | 12 | 22 | 14 | 65 | ⊚ | ○ |
| Example 3 | 30 | 1.3 | 0.9 | 0.5 | 5 | 0.8 | 3.9 | 20 | 27 | 55 | ⊚ | ⊚ |

When the internal pressure of the furnace is increased, the crystal grain size tends to be small, and the crystal grain size distribution width tends to be narrowed. The crystal grain size distribution directly affects, for example, the thermal diffusivity (thermal conductivity), crystallinity, residual stress, breaking strength, and easiness in crack formation, and hence is a set of information essential for the stable manufacturing of single crystalline silicon.

From the results shown in Table 3, it can be seen that by controlling the internal pressure of the furnace, it is possible to control the orientational states (orientation proportions) of the crystal grains in the Miller index plane (111) and the crystal grains in the Miller index plane (220).

The analysis of the diffraction intensity corresponding to the Miller plane (220) appearing in the X-ray diffraction chart reveals that as compared with the samples obtained by deposition under normal pressure, in the samples obtained by deposition under high pressures, sharp peaks tend to be observed, and that tendency (and the peak intensity) is enhanced.

The surface of the sample exhibiting sharp peaks corresponding to the Miller index plane (220) was observed with a Nomarski differential interference microscope, and consequently, the presence of the regions locally different in crystal phase was verified, and the number of such regions and the number of the peaks nearly coincides with each other.

As for the thermal conductivity, the tendency is such that the thermal conductivity is lowered with the increase of the internal pressure of the furnace. This is considered to be ascribable to the observation that the higher the internal pressure of the furnace in the deposition conditions, the more easily occurs the local formation of needle-like crystals having as the main plane the Miller index plane (220) in the deposition plane (the plane perpendicular to the growth direction).

The thermal diffusivity is the area representing the magnitude of the heat diffusible in a unit time, and is a physical quantity independent of the thermal equilibrium relation. The thermal diffusivity is important as the parameter involved in the dynamic incoming and outgoing of the heat in the thermal equilibrium during manufacturing single crystalline silicon.

The items of CZ and FZ provided in Table 3 relate to the evaluation of the use adaptability; the polycrystalline silicon bars for use in CZ has a population composed of 2000 polycrystalline bars, and the polycrystalline silicon bars for use in FZ has a population composed of 150 polycrystalline bars; the manufacturing yields were ranked with the marks ×, Δ, ○ and ⊚ arranged in the ascending order of grades.

### Industrial Applicability

The present invention provides a technique capable of controlling the properties of polycrystalline silicon, for actualizing the crystal grain size, the crystal orientation and the thermal diffusivity suitable for the use of the polycrystalline silicon.

### Reference Signs List

- 100: Reaction furnace
- 1: Bell jar
- 2: Observation window
- 3: Cooling medium inlet (bell jar)
- 4: Cooling medium outlet (bell jar)
- 5: Base plate
- 6: Cooling medium inlet (base plate)
- 7: Cooling medium outlet (base plate)
- 8: Outlet of reaction exhaust gas
- 9: Gas feeding nozzle
- 10: Electrode
- 11: Core wire holder
- 12: Silicon core wire
- 13: Polycrystalline silicon bar
- 14: Rod
- 20: Plate-like sample

## Claims

1. A method for manufacturing a polycrystalline silicon bar on the basis of the Siemens method,
wherein polycrystalline silicon is deposited under the condition that the interior of a reaction furnace is controlled within a pressure range from 0.45 to 0.9 MPa; and
there is obtained a polycrystalline silicon bar having an average value of the crystal grain sizes of 6 µm or less, based on the crystal grain sizes evaluated by the EBSD method (electron backscattering diffraction method) in arbitrary portions of the polycrystalline silicon bar.

2. The method for manufacturing a polycrystalline silicon bar according to claim 1, wherein the pressure range is controlled to be from 0.6 to 0.9 MPa.

3. The method for manufacturing a polycrystalline silicon bar according to claim 1 or 2, wherein the reaction temperature during performing the deposition reaction of the polycrystalline silicon is set within a range from 1100°C to 1150°C.

4. A polycrystalline silicon bar grown by the method according to claim 1 or 2,
wherein when plate-like samples sampled from arbitrary portions of the polycrystalline silicon bar are evaluated by the EBSD method (electron backscattering diffraction method), the crystal grain sizes fall within a range from 0.5 to 30 µm and the average grain size is 6 µm or less.

5. A polycrystalline silicon block obtained by crushing the polycrystalline silicon bar according to claim 4.

6. A polycrystalline silicon bar grown by the method according to claim 1 or 2,
wherein each of the n pieces of the plate-like samples sampled from the arbitrary portions of the polycrystalline silicon bar is disposed at a position allowing the Bragg reflection from the Miller index plane (111) to be detected, the average value of the diffraction intensities obtained by measuring the X-ray diffraction detection magnitudes while the plate-like samples are being rotated within the measurement plane is obtained, and when the population standard deviation and the population mean of the population of the measurement results of the n pieces of the plate-like samples are represented by σ and the µ, respectively, the value of the coefficient of variation defined by CV = σ/µ is 25% or less.

7. A polycrystalline silicon block obtained by crushing the polycrystalline silicon bar according to claim 6.

8. A polycrystalline silicon bar grown by the method according to claim 1 or 2,
wherein each of the n pieces of the plate-like samples sampled from the arbitrary portions of the polycrystalline silicon bar is disposed at a position allowing the Bragg reflection from the Miller index plane (220) to be detected, the average value of the diffraction intensities obtained by measuring the X-ray diffraction detection magnitudes while the plate-like samples are being rotated within the measurement plane is obtained, and when the population standard deviation and the population mean of the population of the measurement results of the n pieces of the plate-like samples are represented by σ and the µ, respectively, the value of the coefficient of variation defined by CV = σ/µ is 30% or less.

9. A polycrystalline silicon block obtained by crushing the polycrystalline silicon bar according to claim 8.

10. A polycrystalline silicon bar grown by the method according to claim 1 or 2,
wherein each of the n pieces of the plate-like samples sampled from the arbitrary portions of the polycrystalline silicon bar is disposed at a position allowing the Bragg reflection from the Miller index plane (220) to be detected, the ratio of the area of the diffraction peak, appearing in the chart obtained by measuring the X-ray diffraction detection magnitude while the plate-like sample is being rotated within the measurement plane, to the area of the total diffraction intensity is obtained for each of the n pieces of the plate-like samples, and the average value of the n area ratios is 5% or more.

11. A polycrystalline silicon block obtained by crushing the polycrystalline silicon bar according to claim 10.

12. A polycrystalline silicon bar grown by the method according to claim 1 or 2,
wherein the thermal diffusivity of a plate-like sample sampled from an arbitrary portion of the polycrystalline silicon bar is 73 mm²/sec or less.

13. A polycrystalline silicon block obtained by crushing the polycrystalline silicon bar according to claim 12.
